# EUROPÄISCHE PATENTSCHRIFT

(11) **EP 3 414 194 B1**
(45) Veröffentlichungstag und Bekanntmachung des Hinweises auf die Patenterteilung: **04.12.2019**
(21) Anmeldenummer: 17705805.4
(22) Anmeldetag: 31.01.2017
(51) Int. Cl.: B65G 47/82, B65B 19/34, B65B 35/36, B65B 35/40, B65G 65/00

(54) **VERFAHREN UND VORRICHTUNG ZUM GRUPPIEREN VON PRODUKTROHLINGEN**
METHOD AND DEVICE FOR GROUPING PRODUCT BLANKS
PROCÉDÉ ET DISPOSITIF DE REGROUPEMENT D'ÉBAUCHES DE PRODUITS

(30) Priorität: 08.02.2016 DE 102016102170
(43) Veröffentlichungstag der Anmeldung: 19.12.2018
(73) Patentinhaber: Texa AG, 7023 Haldenstein (CH)
(72) Erfinder: ALIG, Lukas, 7000 Chur (CH)
(74) Vertreter: Patentanwälte Behrmann Wagner PartG mbB
(86) Internationale Anmeldenummer: PCT/EP2017/052069
(87) Internationale Veröffentlichungsnummer: WO 2017/137283

(56) Entgegenhaltungen:
- WO-A1-97/42109
- WO-A1-2005/019035
- DE-A1- 3 835 058

## Beschreibung

Die Erfindung betrifft ein Verfahren gemäß dem Oberbegriff des Anspruchs 1 zum Gruppieren von als Dosen, Tuben oder Kartuschen ausgebildeten, insbesondere leeren, länglichen Produkten, wobei die, bevorzugt zylindrischen, Produkte mit einer anliefernden Fördereinrichtung, bevorzugt von einer Produktionslinie zur Herstellung der Produkte, angeliefert und auf ein Förderband (Transportband) abgelegt werden und mit diesem mit einer Fördergeschwindigkeit entlang einer Förderstrecke in eine Förderrichtung gefördert werden, wobei eine Produktgruppe umfassend mehrere der Produkte mit Transfermitteln gleichzeitig von dem Förderband in Aufnahmemittel, beispielsweise eine Dornplatte oder unmittelbar eine Umverpackung transferiert werden, wobei die Transfermittel zum Transferieren der Produkte während der Bewegung mit der Produktgruppe in der Förderrichtung winklig, insbesondere senkrecht zur Förderrichtung in einer Transferrichtung auf die Aufnahmemittel zu verstellt werden und wobei die Aufnahmemittel nach einem Transfer jeweils einer Produktgruppe oder nach dem Transfer mehrerer Produktgruppen senkrecht zur Förderrichtung sowie senkrecht zur Transferrichtung (d.h. bevorzugt entlang einer Vertikalachse) verstellt werden, um die folgende Produktgruppe oberhalb oder unterhalb der bereits transferierten Produktgruppen aufnehmen zu können bzw. aufzunehmen.

Ferner betrifft die Erfindung eine Gruppiervorrichtung gemäß dem Oberbegriff des Anspruchs 7 zum Gruppieren von als Dosen, Tuben oder Kartuschen ausgebildeten Produkten, wobei die Gruppiervorrichtung zur Durchführung des erfindungsgemäßen Verfahrens ausgebildet ist. Die Vorrichtung umfasst eine anliefernde Fördereinrichtung für die vorgenannten Produkte, ein umlaufendes Förderband (umlaufendes Transportband) zum Fördern der Produkte entlang einer Förderstrecke in einer Förderrichtung, Transfermittel zum Transferieren einer Produktgruppe von dem Förderband in Aufnahmemittel sowie Antriebsmittel und Steuermittel zum Ansteuern der Antriebsmittel. Bei den Antriebsmitteln handelt es sich um Antriebsmittel zum Antreiben der Fördereinrichtung mit einer Fördergeschwindigkeit sowie zum Antreiben der Transfermittel und der Aufnahmemittel umfassend bevorzugt mehrere Antriebe, beispielsweise mindestens einen Elektromotor, bevorzugt einen Servomotor und/oder mindestens einen pneumatischen Antrieb und/oder mindestens einen hydraulischen Antrieb. Denkbar ist es mindestens zwei der anzutreibenden Funktionseinheiten (Förderband, Aufnahmemittel und Transfermittel) mit einem gemeinsamen Antrieb anzutreiben. Bei Bedarf steuern die Steuermittel auch einen Antrieb zum Antreiben der anliefernden Fördereinrichtung.

Darüber hinaus umfasst die Erfindung ein System gemäß Anspruch 13, hier eine Produktionsanlage, umfassende eine erfindungsgemäße Gruppiervorrichtung sowie eine Herstellungsvorrichtung zum Herstellen der zu gruppierenden Produkte, die die anliefernde Fördereinrichtung mit den zu gruppierenden Produkten versorgt.

Gruppiervorrichtungen zur Gruppierung von in der Regel im Wesentlichen zylindrischen Produkteinheiten, wie leere Dosen, Tuben oder Kartuschen sind in unterschiedlichsten Ausführungen bekannt. Bei der Produktkategorie "Kartuschen" handelt es sich um im Wesentlichen zylindrische Verpackungen, beispielsweise für Silikon oder Acryl, die mit einem in eine Hülse einschiebbaren Kartuschenboden versehen sind, um den Kartuscheninhalt (mit einer sogenannten Pistole, insbesondere einer Silikonpistole) durch einen dem Boden axial gegenüberliegenden Auslass herausdrücken zu können. Die leeren Produkte kommen in der Regel von einer Herstellungsvorrichtung, auf der sie produziert werden und die Aufgabe besteht darin die Produkte in relativ große Einheiten zusammenzufassen, insbesondere zu verpacken und zu Abfüllbetrieben weiterzubefördern. Zum Zusammenstellen dieser Einheiten ist es üblich, die Produkte zu gruppieren, wobei im einfachsten Fall eine gruppierte Produktgruppe eine vorgenannte Einheit darstellt - üblicherweise werden mehrerer solcher Produktgruppen zu einer vorgenannten Einheit zusammengefasst.

So ist beispielsweise aus der FR-A-2 391 126 eine Vorrichtung zum Gruppieren von kontinuierlich angelieferten Produkten bekannt, die von einer Produktionslinie bzw. Herstellvorrichtung kommen. Die Produkte werden mit der bekannten Vorrichtung gruppiert, in dem zwei hintereinander herlaufend arbeitende Fördereinheiten so angesteuert werden, dass die eine der Fördereinheit beschickt wird, während die andere zu einer Abgabestation verfahren und dort entleert wird. Der Aufbau ist vergleichsweise komplex und der Raumbedarf groß. Darüber hinaus ist die Arbeitsgeschwindigkeit (Taktzahl) äußerst begrenzt.

In ähnlicher Weise arbeitet eine in der US-A-5,339,606 beschriebene Gruppiervorrichtung. Entgegen der zuvor beschriebenen Vorrichtung erfolgt die Übergabe auf eine Förder- und Gruppiereinheit kontinuierlich und immer am selben Ort. Die bekannte Vorrichtung kann mit einer deutlich höheren Taktzahl arbeiten als die in der FR-A-2 391 126 beschriebene Vorrichtung - nachteilig ist jedoch hier der Aufwand zur Umrichtung der Vorrichtung bei einem Durchmesserwechsel der Produkte. Diese Kritik gilt auch für die aus der US-A-5,704,195 bekannte Vorrichtung.

Eine deutlich verbesserte Gruppiervorrichtung ist in der EP 1 114 784 B1 beschrieben, bei der die Produkte nicht unmittelbar von einem Pendeltaschenband auf ein Förderband abgelegt werden. Zwischen dem Pendeltaschenband und dem Förderband befindet sich ein flexibler Bandabschnitt zur Zwischenablage der Produkte, wobei der flexible Bandabschnitt, das abfördernde Förderband sowie das anliefernde Pendeltaschenband eine gemeinsame Übergabestrecke aufweisen. Nach Ablage einer vorgebbaren Anzahl von zu einer Gruppe zusammenzufassenden Produkten auf dem flexiblen Band, wird dieses zurückbewegt, wodurch die Produkte auf das Förderband übergeben werden. Während der Übergabe der Produktgruppe von dem Förderband auf die Aufnahmemittel steht das Förderband still und die Produktgruppe wird durch eine rein translatorische Bewegung der einen Schieber umfassenden Transfermittel senkrecht zur Förderrichtung des Förderbandes in die Aufnahmemittel verschoben. Nach der Ablage der Produkte wird das flexible Band mit hoher Geschwindigkeit wieder in eine Startposition bewegt, wobei es hierbei das anliefernde Pendeltaschenband sowie das Förderband überholen muss. Dies kann bei großen Produktdurchmessern und einer gleichzeitig hohen Taktzahl des anliefernden Pendeltaschenbandes aufgrund der auftretenden hohen positiven und negativen Beschleunigung zu einem unruhigen Transportablauf führen.

Aus der fachfremden WO 2012/121762 A1 ist ein Verfahren zum Überführen von Flaschen in Kartonverpackungen bekannt, wobei die Kartonverpackungen auf einem Förderband bereitgestellt werden, welches die befüllten Kartonverpackungen geradlinig weiter fördert. Die Flaschen können mittels eines Schiebers von einem Fördereinrichtungsförderband senkrecht zur Förderrichtung in die Kartonverpackungen überführt werden.

Aus der EP 2 960 189 A1 ist eine Vorrichtung und ein Verfahren zum Abpacken von Tuben bekannt, wobei mithilfe von bezogen auf eine Förderrichtung eines Förderbandes ortsfesten Schiebern Tubenrohre zunächst auf zwei Verteilerplattenhälften einer Verteilerplatte geschoben werden, die dann relativ zueinander verfahren und daraufhin die Tubenrohre mittels ortsfesten Schiebern weiter verschoben werden auf höhenverstellbare Gruppierplatten.

Aus der DE 10 2004 026 612 A1 ist eine fachfremde Vorrichtung zur Stapelbildung von Packgut und Übergabe des Packgutes in ein Packguttransportsystem bekannt.

Ferner ist aus der WO 2005/019035 A1, welche auf die Anmelderin zurückgeht, ein Verfahren zum Gruppieren von bevorzugt leeren, als Dosen, Tuben oder Kartuschen ausgebildeten länglichen Produkten bekannt, wobei die Produkte mit einer anliefernden Fördereinrichtung bevorzugt von einer Produktionslinie zur Herstellung der Produkte, angeliefert und auf einem Förderband abgelegt werden und mit diesem mit einer Fördergeschwindigkeit entlang einer Förderstrecke in eine Förderrichtung gefördert werden, wobei eine Produktgruppe umfassend mehrere Produkte mit Transfermittel gleichzeitig von dem Förderband in Aufnahmemittel transferiert werden. Dabei ist vorgesehen, dass Transfermittel zum Transferieren der Produkte während der Bewegung mit der Produktgruppe in Förderrichtung winklig, insbesondere senkrecht zur Förderrichtung in einer Transfereinrichtung auf die Aufnahmemittel zu verstellt werden. Die Aufnahmemittel werden nach einem Transfer jeweils einer Produktgruppe oder nach dem Transfer mehrerer Produktgruppen senkrecht zur Förderrichtung sowie senkrecht zur Transferrichtung verstellt, um die folgende Produktgruppe oberhalb oder unterhalb der bereits transferierten Produktgruppe aufnehmen zu können. WO 2005/019035 A1 offenbart ein Verfahren nach dem Oberbegriff des Anspruchs 1 und eine Gruppiervorrichtung nach dem Oberbegriff des Anspruchs 7.

Außerdem ist aus der DE 38 35 058 A1 eine Vorrichtung zum Einbringen von Gegenständen, insbesondere in Form von Tuben oder dergleichen, in Kartons mit einer die Gegenstände zuführenden Einrichtung und einer intermittierend umlaufenden Fördereinrichtung bekannt, welche oben und an den Seiten offene, sich quer zur Förderrichtung erstreckende, zum Aufnehmen der Gegenstände dienende Fächer aufweist, und der eine Ausstoßrichtung mit einem sich über mehrere Fächer erstreckenden, in Richtung der Fächer wirkenden Schubrechen zugeordnet ist, mittels dem eine vorbestimmte Anzahl von Gegenständen aus den Fächern in eine Zwischenaufnahme schiebbar ist, in der die Gegenstände aufeinander zu bewegt werden, bevor sie in dem bereitgestellten Karton abgelegt werden. Ferner offenbart die WO 97/42109 A1 ebenfalls eine Vorrichtung zum Einbringen von Gegenständen in Ablagebehältnissen mit einer die Gegenstände zuführenden Einrichtung.

Ausgehend von dem vorgenannten Stand der Technik liegt der Erfindung daher die Aufgabe zugrunde, ein Gruppierverfahren sowie eine Vorrichtung zur Durchführung eines solchen Verfahrens anzugeben, mit denen sichergestellt wird, dass als Dosen, Tuben oder Kartuschen ausgebildete Produkte auch bei hohen Taktzahlen einer anliefernden Fördereinrichtung ruhig bzw. störungsfrei gruppierbar sind, wobei sich die Gruppiervorrichtung durch einen einfachen Aufbau sowie geringe Umrüstzeiten bei einem Durchmesserwechsel der zu gruppierenden Produkte auszeichnen soll.

Diese Aufgabe wird hinsichtlich des Verfahrens mit den Merkmalen des Anspruchs 1 gelöst.

Hinsichtlich der Gruppiervorrichtung wird die Aufgabe mit den Merkmalen des Anspruchs 7 gelöst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen verfahrensgemäß offenbarte Merkmale auch als vorrichtungsgemäß offenbart gelten und beanspruchbar sein. Ebenso sollen vorrichtungsgemäß offenbarte Merkmale auch als verfahrensgemäß offenbart gelten und beanspruchbar sein.

Der Erfindung liegt der Gedanke zugrunde, sowohl die Aufnahmemittel als auch die Transfermittel entlang der Förderstrecke verstellbar anzuordnen und Aufnahmemittel sowie Transfermittel während des Produktgruppentransfers von dem Förderband in die Aufnahmemittel entlang der Förderstrecke in der Förderrichtung zu verstellen. Bevorzugt vollführen die Transfermittel dabei eine kombinierte Bewegung sowohl in der Förderrichtung als auch senkrecht dazu in Richtung Aufnahmemittel, um die Produktgruppe auf diese zu übergeben. Nach vollführter Übergabe der Produktgruppe auf die Aufnahmemittel werden dann Aufnahmemittel und Transfermittel entgegen der Förderrichtung entlang der Förderstrecke verstellt, um daraufhin wieder mit dem Förderband bzw. der nächsten Produktgruppe in der Förderrichtung verstellt zu werden, um dabei die weitere Produktgruppe zu übergeben bzw. zu transferieren. Dieser Vorgang wiederholt sich dann immer wieder. Durch die Verstellbewegung sowohl der Aufnahmemittel als auch der Transfermittel zusammen mit der zu transferierenden Produktgruppe in der Förderrichtung muss zum Transfer der Produktgruppe das Förderband nicht angehalten oder dessen Geschwindigkeit für den Transfer reduziert werden, wodurch positive und negative Beschleunigungen (beschleunigen und bremsen) des Förderbandes vermieden werden können. Durch die Anwendung des erfindungsgemäßen Gruppierverfahrens bzw. den Einsatz der erfindungsgemäßen Gruppiervorrichtungen kann auf jegliche Zwischenspeicher vor dem Förderband, insbesondere Rollenspeicher mit verstellbaren Umlenkrollen, wie diese im Stand der Technik eingesetzt werden müssen, verzichtet werden.

Erfindungsgemäß ist vorgesehen, dass die Aufnahmemittel derart angesteuert werden bzw. ansteuerbar sind, dass diese nach einem erfolgtem Produktgruppentransfer oder nach dem Transfer mehrerer Produktgruppen sowohl senkrecht zur Förderrichtung als auch senkrecht zur Transferrichtung verstellt werden, um die folgende Produktgruppe oberhalb oder unterhalb der bereits transferierten Produktgruppen aufnehmen zu können. Erfindungsgemäß sind die Aufnahmemittel mittels eines Roboterarms entlang einer Förderrichtung hin und her sowie senkrecht hierzu verstellbar oder alternativ entlang von zwei winklig zueinander angeordneten Verstellachsen durch zwei überlagerte winklig zueinander orientierte translatorische Bewegungen jeweils entlang einer der Verstellachsen verstellbar.

Die Erfindung ermöglicht zudem eine später noch zu erläuternde Weiterbildung der Erfindung, wonach die Produkte, insbesondere nacheinander, unmittelbar von der anliefernden Fördereinrichtung auf das, bevorzugt als Taschenband ausgebildete, Förderband übergeben werden und nicht zunächst in einer Zwischenablage, beispielsweise einem im Stand der Technik beschriebenen flexiblen Band zwischengespeichert werden müssen, wodurch insgesamt ein ruhiger und sicherer Produktablauf gewährleistet werden kann. Insbesondere ist es möglich und bevorzugt, wenn die Fördereinrichtung kontinuierlich mit einer, bevorzugt konstanten Geschwindigkeit betrieben wird, die in einem festen Verhältnis zur Geschwindigkeit der anliefernden Fördereinrichtung steht, also mit einer Geschwindigkeit, die es erlaubt, nacheinander Produkte unmittelbar von der anliefernden Fördereinrichtung übernehmen zu können. Dabei ist die Geschwindigkeit des Förderbandes bevorzugt so auf die Geschwindigkeit der anliefernden Fördereinrichtung abgestimmt, dass eine Produktposition eines Produktes auf der anliefernden Fördereinrichtung immer mit der nächsten freien Produktaufnahmeposition auf dem Förderband zur Deckung kommt.

Bevorzugt erfolgt die Verstellbewegung der Transfermittel und der Aufnahmemittel parallel zu der zu transferierenden Produktgruppe in der Förderrichtung geradlinig, d.h. diese ist als translatorische Verstellbewegung ausgebildet, die im Falle der Transfermittel überlagert ist von einer weiteren, insbesondere translatorischen (Transfer-) Verstellbewegung in einer Transferrichtung senkrecht zur Förderrichtung auf die Aufnahmemittel zu.

Bei den Aufnahmemitteln handelt es sich insbesondere nicht um ein Förderband. Erfindungsgemäß werden die Aufnahmemittel mittels eines Roboterarms entlang der Förderrichtung hin und her sowie senkrecht hierzu verstellt oder alternativ erfindungsgemäß entlang von zwei winklig zueinander angeordneten Verstellachsen, durch zwei überlagerte, winklig zueinander orientierte translatorische Bewegungen jeweils entlang einer der Verstellachsen verstellt.

Bevorzugt ist eine der Verstellachsen entlang der Förderrichtung bzw. parallel zu dieser und die andere senkrecht in einer Hoch- bzw. Vertikalrichtung erstreckt. Anders ausgedrückt werden die Aufnahmemittel bevorzugt durch zwei, bevorzugt überlagerte, winklig, bevorzugt rechtwinklig, zueinander orientierte translatorische Bewegungen jeweils entlang einer der Verstellachsen verstellt.

Als besonders vorteilhaft hat sich eine Ausgestaltung des Verfahrens bzw. der Steuermittel der Gruppiervorrichtung herausgestellt, wonach die Aufnahmemittel und/oder die Transfermittel während des Transfers der Produktgruppe synchron mit dem Förderband und der darauf geförderten zu übergebenden Produktgruppe entlang der Förderstrecke in der Förderrichtung verstellt bzw. bewegt werden, d.h. mit derselben Geschwindigkeit wie die Produktgruppe bzw. das Förderband in der Förderrichtung, um somit auch hier positive und negative Beschleunigungen, die sich negativ auf den Produkttransferablauf auswirken könnten, von vornherein zu vermeiden. Die Zurückbewegung entgegen der Förderrichtung nach erfolgtem Transfer kann, muss nicht synchron erfolgen. Bevorzugt werden Aufnahmemittel und Transfermittel nach Rückbewegung gemeinsam oder separat voneinander wieder aufsynchronisiert mit der Geschwindigkeit des Förderbandes in der Förderrichtung, um dann für den Transfer der weiteren Produktgruppe wieder synchron, d.h. mit der gleichen Geschwindigkeit wie die Produktgruppe in der Förderrichtung verstellt werden zu können.

Wie eingangs erläutert ist gemäß des erfindungsgemäßen Verfahrens vorgesehen bzw. die erfindungsgemäße Vorrichtung derart eingerichtet, dass die Aufnahmemittel nach einem Transfer jeweils einer Produktgruppe oder nach dem Transfer mehrerer Produktgruppen senkrecht zur Förderrichtung sowie senkrecht zur Transferrichtung verstellt werden, um die folgende Produktgruppe oberhalb oder unterhalb der bereits transferierten Produktgruppen aufnehmen zu können bzw. aufzunehmen. Bevorzugt umfassen die Aufnahmemittel hierzu eine Aufnahmeeinheit, die mehrere Reihen von entlang der Förderrichtung nebeneinander angeordneten Aufnahmeplätzen bzw. Aufnahmeelementen zur jeweiligen Aufnahme eines Produktes aufweist. Anders ausgedrückt ist die Aufnahmeeinheit eingerichtet sowohl nebeneinander in der Förderrichtung als auch übereinander senkrecht zur Förderrichtung und senkrecht zur Transferrichtung Produkte aufzunehmen, was durch die erfindungsgemäße verstellbare Anordnung bzw. das erfindungsgemäße Verstellen der Aufnahmemittel nach einem Transfer einer Produktgruppe oder nach dem Transfer mehrerer Produktgruppen senkrecht zur Förderrichtung sowie senkrecht zur Transferrichtung sichergestellt wird. Bevorzugt ist vorgesehen, die Aufnahmeeinheit der Aufnahmemittel nach deren Befüllung, also nach einer Mehrzahl von Transfers, bei welchen übereinander Produkte oder Produktgruppen an die Aufnahmeeinheit übergeben wurde die befüllte Aufnahmeeinheit auszutauschen durch eine leere Aufnahmeeinheit, insbesondere automatisiert. Im Hinblick auf die konkrete Ausgestaltung der Aufnahmeeinheit gibt es unterschiedliche Möglichkeiten. Bevorzugt ist diese als Dornplatte ausgebildet, insbesondere mit mehreren übereinander angeordneten Reihen von entlang der Förderrichtung nebeneinander angeordneten Dornen. Alternativ ist die Aufnahmeeinheit beispielsweise als Klipsplatte ausgebildet mit mehreren Klips- bzw. Klemmaufnahmen, die bevorzugt in mehreren senkrecht zur Förderrichtung sowie senkrecht zur Transferrichtung übereinander angeordneten Reihen angeordnet sind, wobei sich die Reihen wiederum in der Förderrichtung erstrecken. Wiederum alternativ kann die Aufnahmeeinheit auch als Vakuumplatte ausgebildet sein mit einer Vielzahl von Vakuumplätzen, die analog reihenmäßig angeordnet sind, wobei mehrere Reihen senkrecht zur Förderrichtung und senkrecht zur Transferrichtung übereinander vorgesehen sind.

Im Hinblick auf die konkrete Ausgestaltung der eigentlichen Produktübergabe bzw. des Produkttransfers von der anliefernden Fördereinrichtung auf das Förderband gibt es unterschiedliche Möglichkeiten. Im einfachsten und bevorzugten Fall umfasst die anliefernde Fördereinrichtung ein Transportband mit sogenannten (verschwenkbaren) Transportpendeltaschen, in die jeweils ein Produkt aufnehmbar ist und die durch Verschwenken um eine Verschwenk- bzw. Pendelachse bevorzugt unmittelbar auf die Fördereinrichtung entleerbar sind. Alternativ ist beispielsweise der Einsatz einer rotierenden Vakuumtrommel möglich, mit der die Produkte nacheinander auf das Förderband, insbesondere in Aufnahmetaschen des Förderbandes transferiert werden, wobei die Vakuumtrommel wiederum auf unterschiedlichste Weise beliefert werden kann, beispielsweise mittels eines Förderbandes oder Kettenstiftbandes.

Bei dem Förderband, von dem aus die Produkte mittels der Transfermittel in die Aufnahmemittel transferiert werden ist es wesentlich, dass dieses, insbesondere geradlinig entlang einer Förderstrecke bewegt wird, wobei das Förderband umlaufend bzw. endlos ausgestaltet ist. Der Begriff "Förderband" ist hierbei in einem weiten Sinne zu verstehen und muss nicht notwendigerweise ein durchgängiges Auflageband umfassen - möglich und bevorzugt ist auch eine Ausgestaltung mit einzelnen, miteinander verbundenen, umlaufenden Taschen, die endseitig an jeweils einem umlaufenden Band oder alternativ an einer Kette fixiert sind.

Auch hinsichtlich der Ausgestaltung der Aufnahmemittel gibt es unterschiedliche Möglichkeiten. Im einfachsten Fall handelt es sich um eine sogenannte Dornplatte mit sich senkrecht zur Förderrichtung, bevorzugt horizontal, erstreckenden Aufnahmedornen, auf welche die Produkte einer Produktgruppe aufgesteckt, insbesondere aufgeschoben werden können. Denkbar ist jedoch auch eine alternative Ausführung, bei der die Aufnahmemittel eine Umverpackung, insbesondere eine Kartonverpackung, halten und die Produkteinheiten mittels der Transfermittel unmittelbar in diese Umverpackung gelegt werden. Auch ist es möglich, dass die Aufnahmemittel eine Aufnahmeeinheit zur Aufnahme von mehreren Produktgruppen aufweisen und die zu einer Einheit zusammengefassten Produktgruppen in der Aufnahmeeinheit, beispielsweise mittels eines Fixierbandes und/oder durch Folieren relativ zueinander fixiert werden. Auch ist es möglich, dass die Aufnahmeeinheit als Klipsplatte zum klemmenden Halten mehrerer Produkte übereinander sowie nebeneinander ausgebildet ist oder als Vakuumplatte zum Halten mehrerer Produkte sowohl übereinander als auch nebeneinander durch Anlegen von Unterdruck. Ganz allgemein ist es also bevorzugt, wenn die Aufnahmemittel eine Aufnahmeeinheit aufweisen, die Haltemittel, insbesondere in der Form von Dornen, mechanischen Klipsen und/oder Vakuumsaugern umfasst, die dazu ausgebildet und eingerichtet sind gleichzeitig eine Vielzahl von Produktgruppen bzw. Produkten zu fixieren bzw. zu halten. Dabei ist die Aufnahmeeinheit derart ausgestaltet, dass diese Produkte in mehreren senkrecht zur Förderstrecke sowie senkrecht zur Transferrichtung übereinander angeordneten und sich in der Förderrichtung erstreckenden Reihen aufnehmen kann.

Ebenso gibt es unterschiedliche Ausgestaltungsvarianten im Hinblick auf die konkrete Ausgestaltung der Transfermittel. Im einfachsten und bevorzugten Fall umfassen die Transfermittel eine Schiebereinrichtung, die mehrere, eine Produktgruppe bildenden Produkte von dem Förderband, insbesondere von Aufnahmetaschen des Förderbandes senkrecht zur Förderrichtung, insbesondere horizontal zu den Aufnahmemittel verschiebt. In diesem Fall werden Aufnahmemittel und Transfermittel bevorzugt auf zwei voneinander abgewandten, senkrecht zur Förderrichtung beabstandeten Seiten der zu transferierenden Produktgruppe zusammen mit dieser verstellt. Denkbar ist es auch, dass die Transfermittel einen mechanischen und/oder Vakuumgreifer zum haltenden Transferieren des Produkts einer Produktgruppe zu den Aufnahmemitteln umfassen, wobei diese Greifer beispielsweise an einem entsprechend ansteuerbaren Roboterarm angeordnet sind.

Bevorzugt umfasst das Förderband, insbesondere in Taschen angeordnete Vakuumsauger zum saugenden Halten bzw. Fixieren der Produkte während des Förderns in der Förderrichtung. Bei Bedarf können die Vakuumsauger derart ausgebildet sein, dass die Vakuumbeaufschlagung, ggf. bis auf null während des Transfers in die Aufnahmemittel reduziert wird.

Wie bereits angedeutet ist es von besonderem Vorteil, wenn während einer kontinuierlichen Zuführung von Produkten mittels der anliefernden Fördereinrichtung das Förderband in der Fördereinrichtung mit einer Geschwindigkeit angetrieben wird, die unter Berücksichtigung von, bevorzugt unterschiedlichen, Produktabständen auf der anliefernden Fördereinrichtung und dem Förderband in einem festen Verhältnis zu Geschwindigkeit der anliefernden Fördereinrichtung steht. Dabei wird die Geschwindigkeit von Förderband und Fördereinrichtung bevorzugt an die aktuelle Taktzahl bzw. Outputgeschwindigkeit einer vorgeordneten Produktherstellvorrichtung, insbesondere einer Dosen-, Tuben- oder Kartuschenherstellvorrichtung angepasst, wobei gleichzeitig eine Anpassung der Förderbandgeschwindigkeit und der Fördereinrichtungsgeschwindigkeit an diese vorgeordnete Herstellvorrichtung realisiert ist, um somit das Geschwindigkeitsverhältnis von Förderband und Fördereinrichtung immer gleich zu halten.

Von dieser Maßgabe wird lediglich beim Lückenfüllen abgewichen (hier wartet das Förderband auf das nächste Produkt) oder in dem Fall, dass Förderband und Fördereinrichtung beide angehalten werden müssen, da die Outputgeschwindigkeit der Herstellvorrichtung auf null zurückgeht. Im Normalfall, d.h. bei einer kontinuierlichen Zuführung von Produkten mittels der Fördereinrichtung werden Förderband und Fördereinrichtung lediglich gemeinsam beschleunigt oder abgebremst (insbesondere in Abhängigkeit der Outputgeschwindigkeit einer vorgeordneten Herstellvorrichtung), so dass sichergestellt wird, dass jede Aufnahme auf dem Förderband ein Produkt von der Fördereinrichtung ablegbar ist. Eine Variation der Geschwindigkeit ausschließlich des Förderbandes (und nicht der Fördereinrichtung) ist somit nicht notwendig, so dass ein unruhiges Laufverhalten sicher vermieden wird. Förderband und Fördereinrichtung verhalten sich also gleichförmig und werden bis auf vorerwähnte Ausnahmen gemeinsam beschleunigt oder abgebremst, insbesondere in Abhängigkeit des Outputtaktes einer vorgeordneten Herstellvorrichtung.

Das erfindungsgemäße Verfahren sowie die erfindungsgemäße Vorrichtung eignen sich in Weiterbildung der Erfindung insbesondere auch für ein problemloses Schließen von Lücken auf der anliefernden Fördereinrichtung. Diese Produktlücken werden mittels geeigneter Sensoren, beispielsweise einer Lichtschranke erkannt und die Steuermittel steuern die Antriebsmittel derart an, dass die Geschwindigkeit des Förderbandes reduziert wird, ggf. bis auf null, jedenfalls auf eine Geschwindigkeit, die geringer ist als die Zuführgeschwindigkeit (Anliefergeschwindigkeit) der anliefernden Fördereinrichtung, wobei die anliefernde Fördereinrichtung bevorzugt kontinuierlich weiterbewegt wird und die auf die Produktlücke folgende Lücke an den entsprechenden nächsten Aufnahmeplatz auf dem Förderband abgelegt werden, wobei nach Schließen der Lücke bevorzugt das Förderband wieder synchron läuft mit der anliefernden Fördereinrichtung. Bevorzugt ist es, wenn die Steuermittel die Antriebsmittel für die Transfermittel und/oder die Aufnahmemittel dann gleichzeitig derart ansteuern, dass auch deren Geschwindigkeit bei einer Bewegung in die Förderrichtung reduziert wird, bevorzugt entsprechend der Geschwindigkeitsreduzierung des Förderbandes, weiter bevorzugt um sich auch während des Lückenschließens synchron mit dem Förderband zu bewegen oder bei Anhalten des Förderbandes analog zu dem Förderband anzuhalten.

Weitere Vorteile, Merkmale und Einzelheiten der Erfindung ergeben sich aus der nachfolgenden Beschreibung bevorzugter Ausführungsbeispiele sowie anhand der Zeichnungen.

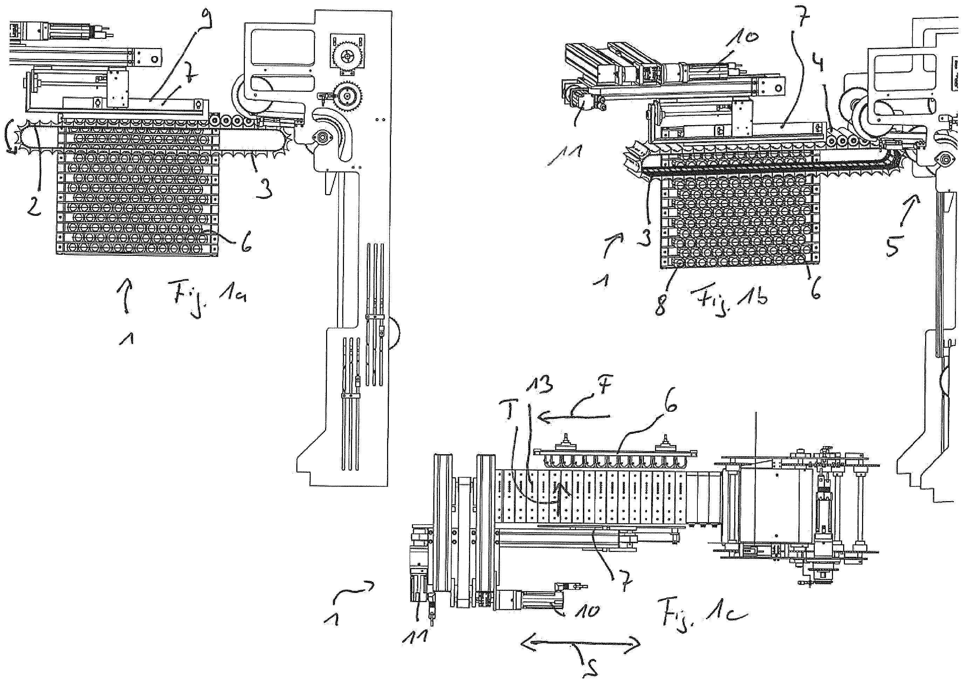

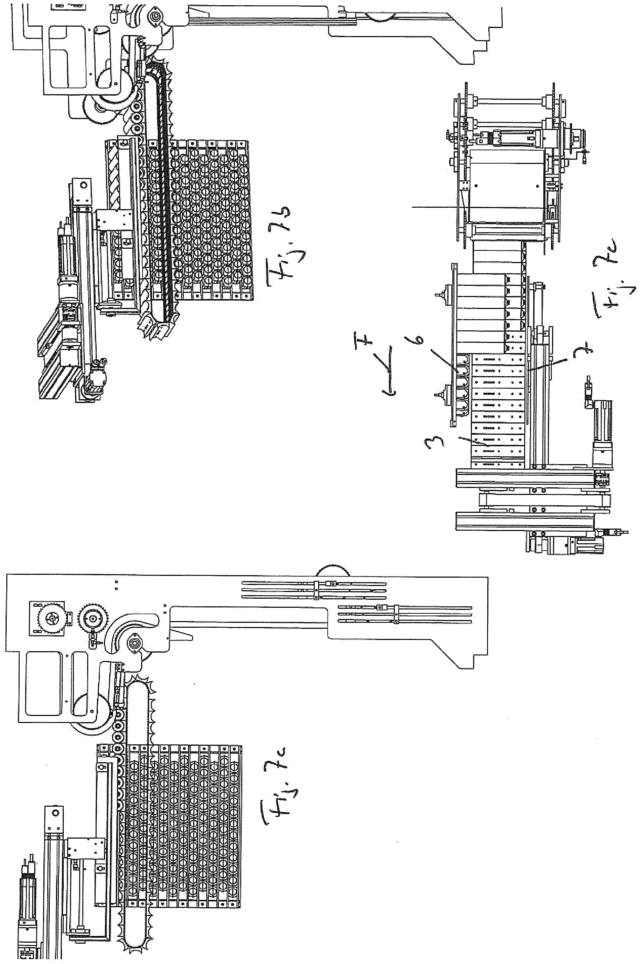

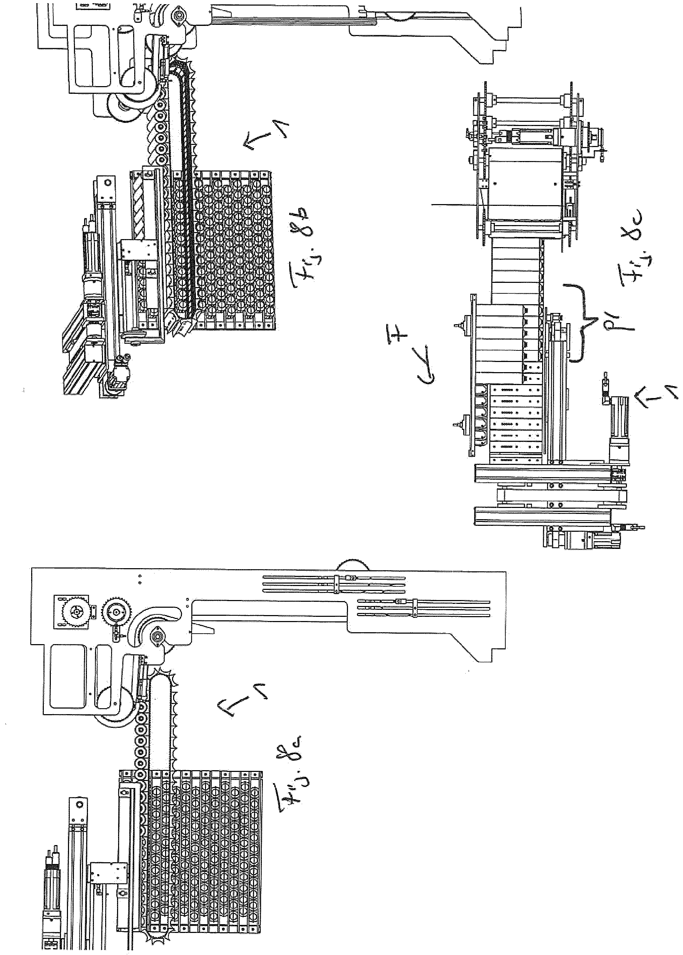

Diese zeigen in den
- Fig. 1a bis Fig. 8c:: unterschiedliche Betriebszustände in einem erfindungsgemäßen Gruppierverfahren bzw. einer erfindungsgemäßen Gruppiervorrichtung, wobei Darstellungen A bis C jeweils unterschiedliche Ansichten desselben Betriebszustandes zeigen.

In den Figuren sind gleiche Elemente und Elemente mit der gleichen Funktion mit den gleichen Bezugszeichen gekennzeichnet.

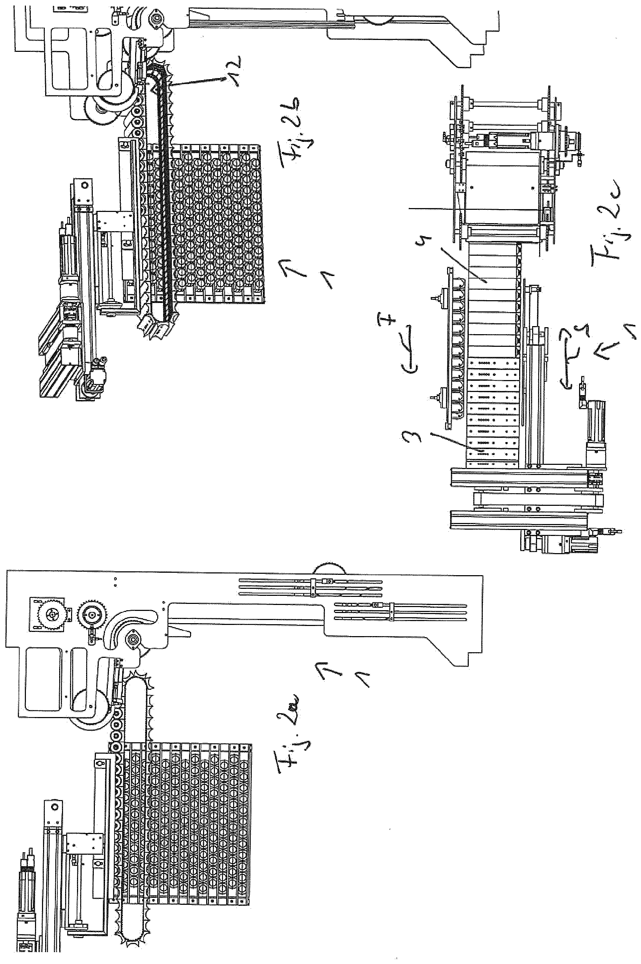

Im Folgenden wird anhand der Fig. 1a bis 1c zunächst der grundsätzliche Aufbau einer nach dem Konzept der Erfindung ausgebildeten Gruppiervorrichtung 1 erläutert, wobei dann im Rahmen der Erklärung der Fig. 2a bis 8c im Wesentlichen nur noch auf die Zustands-Veränderungen im Rahmen der unterschiedlichen Betriebszustände eingegangen wird - der grundsätzliche Aufbau bleibt gleich bzw. sämtliche Figuren zeigen dieselbe Vorrichtung.

Die Gruppiervorrichtung 1 weist ein als Taschenband, umfassend eine Vielzahl von hintereinander angeordneten Taschen 2 zur Aufnahme jeweils eines Produktes in Form einer leeren Dose, einer leeren Tube oder einer leere Kartusche ausgebildetes Förderband 3, welches mit an sich bekannten, aus Übersichtlichkeitsgründen nicht dargestellten Antriebsmitteln, insbesondere in Form mindestens eines Servomotors antreibbar ist, wobei eine in Fig. 1c gezeigte Oberseite (Beladeseite) des Förderbandes 3 mittels einer durch die Antriebsmittel bzw. einer diesen von Steuermitteln vorgegebenen Geschwindigkeit entlang einer hier beispielhaft und bevorzugt horizontalen, geradlinigen Förderstrecke S in einer Förderrichtung F angetrieben ist.

Auf das Förderband 3 werden lückenlos, d.h. ohne Taschen 2 freizulassen, Produkte 4 nacheinander unmittelbar von einer anliefernden Fördereinrichtung 5 abgelegt. In dem konkreten Ausführungsbeispiel handelt es sich bei der anliefernden Fördereinrichtung 5 um ein Transportband mit aus Übersichtlichkeitsgründen nicht dargestellten, beispielsweise in der EP 1 114 784 B1 gezeigten und dort mit dem Bezugszeichen vier gekennzeichneten Transportpendeltaschen, die um eine Pendelachse verschwenkbar sind und aus denen jeweils ein Produkt durch Verschwenken der jeweiligen Tasche ausladbar ist, und zwar unmittelbar in eine Tasche 2 des Förderbandes 3 hinein. Zu erkennen sind Ansaugöffnungen 13 innerhalb der Taschen 2 zum sicheren Halten der Produkte bei der Förderung in der Förderrichtung. Solange auf der anliefernden Fördereinrichtung 5 in einem Bereich vor dem Förderband 3 keine Lücken, d.h. leere Transportpendeltaschen detektiert werden, wird das Förderband 3 mit einer Fördergeschwindigkeit in der Förderrichtung F angetrieben, die bei gegebener Beabstandung von Produkten auf der anliefernden Fördereinrichtung 5 sicherstellt, dass in jede Tasche 2 ein Produkt von der anliefernden Einrichtung abgelegt wird, ohne hierzu die Geschwindigkeit des Förderbandes 3 unabhängig von der Geschwindigkeit der anliefernden Fördereinrichtung 5 variieren zu müssen. Anders ausgedrückt bleibt das Geschwindigkeitsverhältnis der Geschwindigkeit des Förderbandes 3 und der Geschwindigkeit der Fördereinrichtung 5 (bis auf einen fakultativen Lückenschließvorgang) konstant, wobei die Geschwindigkeit des Förderbandes 3 und die Geschwindigkeit der anliefernden Fördereinrichtung 5 gemeinsam auf eine Geschwindigkeit (Outputtaktzahl) einer vorgeordneten Herstellvorrichtung angepasst werden. Hierdurch werden unnötige Beschleunigungen und Verzögerungen, wie diese auftreten würden, wenn die Fördereinrichtung 5 unabhängig vom Förderband 3 zum Befüllen der Taschen 2 immer abgebremst und beschleunigt würde sicher vermieden.

Bei einer theoretisch gleichen Beabstandung der Produkte auf dem Förderband 3 und der anliefernden Fördereinrichtung 5 werden also das Förderband 3 und die anliefernde Fördereinrichtung 5 mit der gleichen Geschwindigkeit betrieben - bei einer größeren (bevorzugten) Beabstandung der Produkte auf der anliefernden Fördereinrichtung 5 als auf dem Förderband 3 wird die anliefernde Fördereinrichtung 5 entsprechend schneller betrieben als das Förderband 3, jedoch werden sowohl Förderband 3 als auch anliefernde Fördereinrichtung 5 mit unterschiedlicher Geschwindigkeit (>0 m/s) betrieben, wobei die Geschwindigkeiten in einem festen Verhältnis zueinander stehen und (bis auf einen etwaigen Lückenschließvorgang) nur gemeinsam bzw. gleichzeitig verändert werden - in Abhängigkeit der vorerwähnten Outputtaktzahl einer vorgeordneten Herstellvorrichtung.

Die auf das Förderband 3 abgelegten Produkte werden jedenfalls in der Förderrichtung F transportiert und gelangen in dem konkreten Ausführungsbeispiel in den Bereich zwischen Aufnahmemittel 6 sowie Transfermittel 7. In dem konkreten Ausführungsbeispiel umfassen die Aufnahmemittel 6 lediglich beispielsweise eine Dornplatte mit einer Vielzahl von sich hier beispielhaft horizontal, jedenfalls senkrecht zur Förderrichtung F erstreckenden Dornen 8 (Aufnahmedorne) zum jeweiligen Aufstecken eines hohlen Produktes. Die Transfermittel 7 umfassen in dem gezeigten Ausführungsbeispiel einen Schieber 9, der senkrecht zur Förderrichtung F auf die Aufnahmemittel 6 zu verstellbar ist, um eine Produktgruppe auf die Aufnahmemittel 6 zu transferieren. Nachdem eine hier beispielhaft horizontal verlaufende Dornreihe mit Produkten gefüllt ist, werden die Aufnahmemittel 6 sowohl senkrecht zur Förderrichtung F als auch senkrecht zu der senkrecht dazu verlaufenden Transferrichtung T verstellt, um die nächste Produktgruppe in dem konkreten Ausführungsbeispiel in der darunter befindlichen Dornreihe ablegen zu können.

Wesentlich ist, dass sowohl die Aufnahmemittel 6 als auch die Transfermittel 7 nicht nur wie oben beschrieben verstellbar sind, sondern entlang der Förderstrecke S in der Förderrichtung F sowie in die entgegengesetzte Richtung, d.h. in Richtung der anliefernden Fördereinrichtung 5 verstellbar sind, um gemeinsam mit einer zu transferierenden Produktgruppe, bevorzugt synchron, d.h. mit derselben Geschwindigkeit wie die Produktgruppe in der Förderrichtung F während eines Transfers und bevorzugt zumindest einen kurzen Zeitabschnitt vor dem eigentlichen Transfer bewegt werden zu können. Auf diese Weise wird sichergestellt, dass die Fördergeschwindigkeit des Förderbandes 3 in der Förderrichtung F unabhängig steuerbar ist von dem eigentlichen Transfer und beispielsweise, bevorzugt linear, angepasst werden kann an die Anlieferfördergeschwindigkeit der anliefernden Fördereinrichtung 5, welche die Produkte bevorzugt in Abhängigkeit einer Herstellungsgeschwindigkeit, einer vorgeordneten Herstellvorrichtung, anliefert.

In Fig. 1c sind mehrere Antriebe 10, 11 zum Antreiben der Transfermittel 7 gezeigt. Bei dem mit dem Bezugszeichen 10 dargestellten elektromotorischen, hier servomotorischen Antrieb handelt es sich um einen Verstellantrieb zum Verstellen der Antriebsmittel bzw. einer Schieberplatte in der Transferrichtung T und zurück, während der mit dem Bezugszeichen 11 gekennzeichnete Antrieb ein Antrieb der Antriebsmittel zum Verstellen der Transfermittel 7 entlang der Förderstrecke S ist. Hierbei handelt es sich ausdrücklich nur eine beispielhafte Ausgestaltung. Die Bewegung kann alternativ beispielsweise mittels eines entsprechenden Mehrachsen-Roboterarms ausgeführt werden. Antriebsmittel zum Antreiben der Aufnahmemittel 6 sind aus Übersichtlichkeitsgründen nicht dargestellt. Die Aufnahmemittel 6 sind wie zuvor beschrieben verstellbar. Bevorzugt umfassen entsprechende Antriebsmittel auch einen Antrieb bzw. eine Antriebsachse zum Wegverstellen der gefüllten Dornplatte zu einer weiteren Verpackungseinrichtung, wobei dann die volle Dornplatte durch eine leere Dornplatte ersetzt wird.

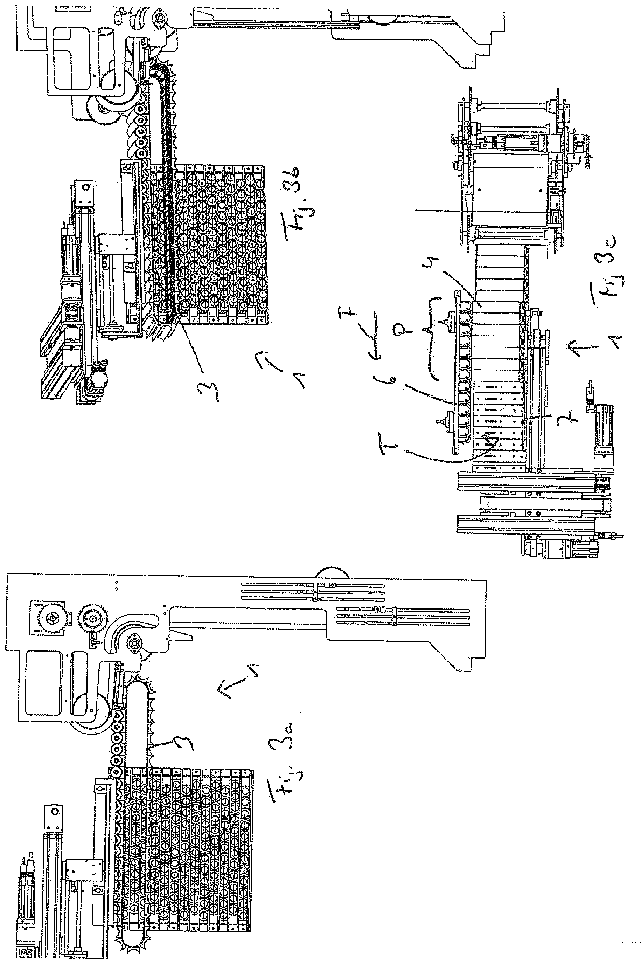

In den Fig. 2a bis 2c ist zu erkennen, dass die Produkte 4 in einem Bereich 12 übergeben werden, und zwar hier beispielhaft durch Umschwenken entsprechender Transportpendeltaschen, die wie erläutert nicht dargestellt sind. Alternative Übergabemöglichkeiten, beispielsweise einer Vakuumtrommel sind realisierbar. In dem Betriebszustand gemäß den Fig. 2a bis 2c wurden verglichen mit dem Betriebszustand gemäß den Fig. 1a bis 1c bereits weitere Produkte 4 auf dem Förderband 3 abgelegt und in der Förderrichtung F entlang der Förderstrecke S transportiert. Aufnahmemittel 6 und Transfermittel 7 befinden sich aufeinander gegenüberliegenden Seiten der Produkte 4 senkrecht zur Förderrichtung F beabstandet. Bei dem Betriebszustand gemäß den Fig. 3a bis 3c hat ein eigentlicher Transferprozess zur Übergabe einer Produktgruppe P umfassend in dem konkreten Ausführungsbeispiel beispielhaft sieben einzelne Produkte 4 bereits begonnen. Zu erkennen ist dies dadurch, dass die Transfermittel 7 bereits ein Stück weit in der Transferrichtung T auf die Aufnahmemittel 6 zu verstellt werden. Während dieses Transfers bewegen sich Aufnahmemittel 6 und Transfermittel 7 zusammen mit der Produktgruppe P in der Förderrichtung F - in dem konkreten Ausführungsbeispiel synchron mit der Produktgruppe P, d.h. mit derselben Geschwindigkeit wie das Förderband 3 in der Förderrichtung F. Die Aufsynchronisierung mit dieser Fördergeschwindigkeit erfolgte bereits in dem Betriebszustand bzw. in der Betriebsphase gemäß den Fig. 2a bis 2c.

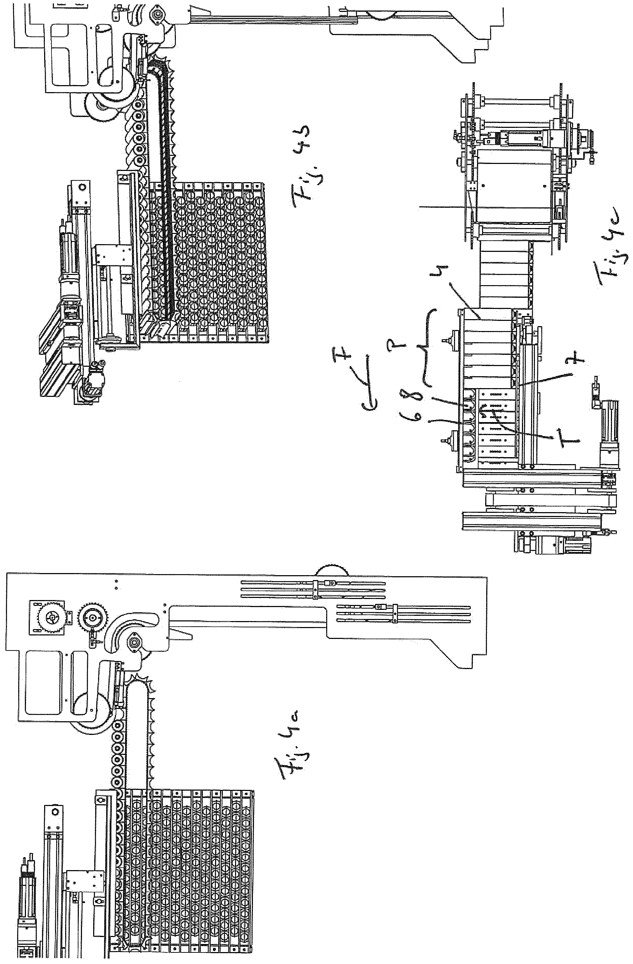

In den Fig. 4a bis 4c ist der Transferprozess bereits weiter fortgeschritten und steht unmittelbar vor seinem Abschluss. Zu erkennen ist, dass sowohl die Transfermittel 7 als auch die Aufnahmemittel 6 verglichen mit dem Zustand gemäß den Fig. 3a bis 3c weiter in der Zeichnungsebene nach links bzw. in der Förderrichtung F verstellt wurden und gleichzeitig die Transfermittel 7 weiter in der Transferrichtung T auf die Aufnahmemittel 6 zu. Die Produkte 4 der Produktgruppe P sind auf Dorne 8 der so beispielhaft vorgesehenen Dornplatte der Aufnahmemittel 6 aufgeschoben.

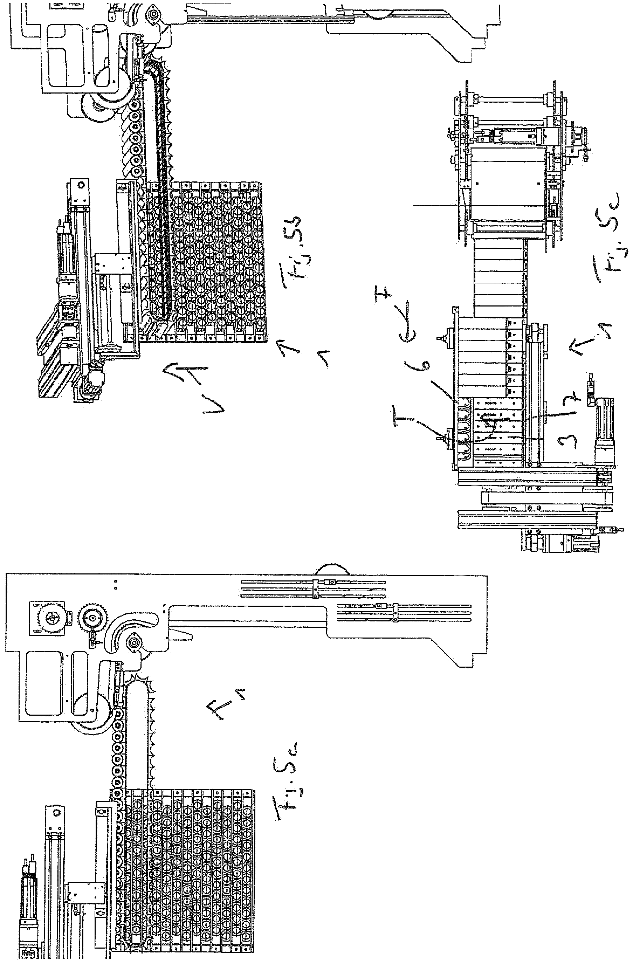

Der Verfahrensschritt gemäß den Fig. 5a bis 5c schließt unmittelbar an. Zu erkennen ist, dass die Transfermittel 7, genauer die beispielhaft vorgesehene Schieberplatte entgegen der Transferrichtung senkrecht zur Förderrichtung F, d.h. bei Fig. 5c in der Zeichnungsebene nach unten zurückverstellt wurden. Während dieser gesamten Schritte ändert sich die Fördergeschwindigkeit des Förderbandes 3 nicht.

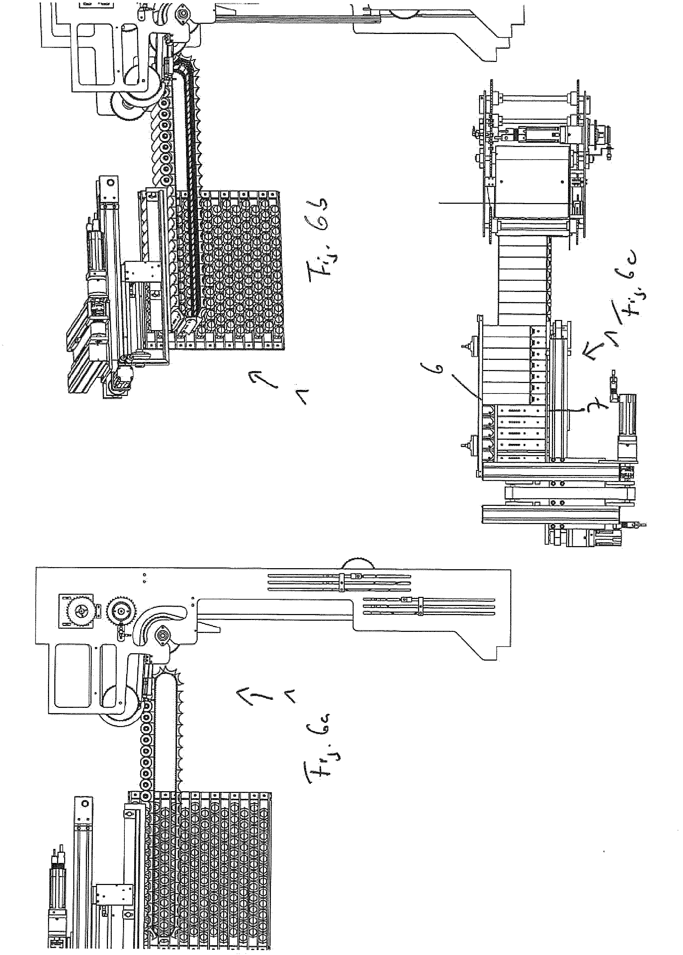

Gleichzeitig oder kurzzeitlich versetzt mit der Rückverstellung der Transfermittel 7 werden die Aufnahmemittel 6 in die in den Fig. 6a bis 6c gezeigte Position verstellt, und zwar in einer Verstellrichtung V (vgl. Fig. 5b), die senkrecht orientiert ist sowohl zur Förderrichtung F als auch zur Transferrichtung T, um bei dem nun folgenden Transfer die nächste bzw. darunter befindliche Dornreihe beschicken zu können. Gleichzeitig oder zeitlich versetzt mit dieser Verstellbewegung und/oder der Rückverstellbewegung der Transfermittel 7 entgegen der Transferrichtung T werden Aufnahmemittel 6 und Transfermittel 7 synchron oder alternativ asynchron entgegen der Förderrichtung F zurückverstellt, und zwar bevorzugt in eine in den Fig. 1a bis 1c gezeigte Anfangsposition. Auch hier ändert sich die Fördergeschwindigkeit des Förderbandes 3 nicht. Sobald eine nächste bzw. weitere vollständige Produktgruppe P' in einem Bereich zwischen den Transfermitteln 7 und den Aufnahmemitteln 6 befindet, werden diese wieder, hier bevorzugt synchron mit dieser weiteren Produktgruppe P', in der Förderrichtung F verstellt und die weitere Produktgruppe P' wird analog zu der vorherigen Beschreibung des Transfers der Produktgruppe P auf die Aufnahmemittel 6 transferiert, woraufhin wieder eine Rückverstellung der Aufnahmemittel 6 und der Transfermittel 7 entgegen der Förderrichtung F erfolgt.

Wird während des Betriebs eine Produktlücke auf der anliefernden Fördereinrichtung 5 mittels geeigneter, nicht dargestellter Sensormittel erkannt, wird die Fördergeschwindigkeit des Förderbandes 3 reduziert, ggf. bis auf null, um diese Lücke passieren zu lassen und die als nächstes zu befüllende Tasche 2 mit dem auf die Lücke folgenden Produkt zu füllen. Daraufhin stellt sich wieder der normale Betriebszustand ein und der Transfer erfolgt wie zuvor beschrieben.

### Bezugszeichen

- 1: Gruppiervorrichtung
- 2: Taschen
- 3: Förderband
- 4: Produkte
- 5: anliefernde Fördereinrichtung
- 6: Aufnahmemittel
- 7: Transfermittel
- 8: Dorne
- 9: Schieber
- 10: Antrieb
- 11: Antrieb
- 12: (Übergabe-)Bereich
- 13: Ansaugöffnungen

- F: Förderrichtung
- P: Produktgruppe
- P': weitere Produktgruppe
- S: Förderstrecke
- T: Transferrichtung
- V: Verstellrichtung

## Patentansprüche

1. Verfahren zum Gruppieren von, bevorzugt leeren, als Dosen, Tuben, oder Kartuschen ausgebildeten länglichen Produkten (4), wobei die Produkte (4) mit einer anliefernden Fördereinrichtung (5), bevorzugt von einer Produktionslinie zur Herstellung der Produkte (4), angeliefert und auf ein Förderband (3) abgelegt werden und mit diesem mit einer Fördergeschwindigkeit entlang einer Förderstrecke (S) in eine Förderrichtung (F) gefördert werden, wobei eine Produktgruppe (P) umfassend mehrere der Produkte (4) mit Transfermittel (7) gleichzeitig von dem Förderband (3) in Aufnahmemittel (6) transferiert werden, wobei die Transfermittel (7) zum Transferieren der Produkte (4) während der Bewegung mit der Produktgruppe (P) in der Förderrichtung (F) winklig, insbesondere senkrecht zur Förderrichtung (F) in einer Transferrichtung (T) auf die Aufnahmemittel (6) zu verstellt werden und wobei die Aufnahmemittel (6) nach einem Transfer jeweils einer Produktgruppe (P) oder nach dem Transfer mehrerer Produktgruppen (P) senkrecht zur Förderrichtung (F) sowie senkrecht zur Transferrichtung (T) verstellt werden, um die folgende Produktgruppe (P) oberhalb oder unterhalb der bereits transferierten Produktgruppen (P) aufnehmen zu können,
**dadurch gekennzeichnet,**
**dass** sowohl die Aufnahmemittel (6) als auch die Transfermittel (7) während des Transfers der Produktgruppe (P), insbesondere synchron mit dem Förderband (3) und der darauf geförderten, zu übergebenden Produktgruppe (P), entlang der Förderstrecke (S) in der Förderrichtung (F) verstellt werden und nach erfolgtem Transfer entlang der Förderstrecke (S) entgegen der Förderrichtung (F) zum Transferieren einer weiteren Produktgruppe (P') in die Aufnahmemittel (6) verstellt werden, und dass die Aufnahmemittel mittels eines Roboterarms entlang der Förderrichtung hin und her sowie senkrecht hierzu verstellt werden oder alternativ entlang von zwei winklig zueinander angeordneten Verstellachsen durch zwei überlagerte, winklig zueinander orientierte translatorische Bewegungen jeweils entlang einer der Verstellachsen verstellt werden.

2. Verfahren nach Anspruch 1,
**dadurch gekennzeichnet,**
**dass** die Transfermittel (7) und Aufnahmemittel (6) nach dem Verstellen entgegen der Förderrichtung (F), insbesondere synchron, mit der weiteren Produktgruppe (P') entlang der Förderstrecke (S) in der Förderrichtung (F) bewegt werden.

3. Verfahren nach einem der vorhergehenden Ansprüche,
**dadurch gekennzeichnet,**
**dass** in einer Aufnahmeeinheit der Aufnahmemittel (6), insbesondere in Form einer Dornplatte, einer Klipsplatte oder einer Vakuumplatte, in der Förderrichtung (F) nebeneinander sowie senkrecht zur Förderrichtung (F) und senkrecht zur Transferrichtung (T) Produkte übereinander aufgenommen werden, und dass die Aufnahmeeinheit nach mehreren Transfervorgängen, bei denen die Aufnahmeeinheit jeweils mit einer Produktgruppe beladen wurde durch eine leere Aufnahmeeinheit ersetzt wird.

4. Verfahren nach einem der vorhergehenden Ansprüche,
**dadurch gekennzeichnet,**
**dass** die Produktgruppe (P) durch Schieben transferiert wird und/oder dass die Produkte (4) der Produktgruppe (P) während des Transfers mittels Vakuum und/oder durch mechanisches Greifen und/oder Klemmen in der Transferrichtung (T) geführt werden.

5. Verfahren nach einem der vorhergehenden Ansprüche,
**dadurch gekennzeichnet,**
**dass** die anliefernde Fördereinrichtung (5) und das Förderband (3) mit Geschwindigkeiten angetrieben werden, die bei einer lückenfreien Produktübergabe in einem festen Verhältnis stehen, so dass bei angetriebener Fördereinrichtung (5) und angetriebenem Förderband (3) auf jede Aufnahmeposition auf dem Förderband (3) ein Produkt (4) ablegbar ist, ohne das Förderband (3) und die Fördereinrichtung (5) unabhängig voneinander zu beschleunigen oder zu bremsen.

6. Verfahren nach einem der vorhergehenden Ansprüche,
**dadurch gekennzeichnet,**
**dass** mit Hilfe von Sensormitteln Produktlücken auf der anliefernden Fördereinrichtung (5) erkannt und die Geschwindigkeit des Förderbandes (3) sowie der mit diesen mitbewegten Transfermittel (7) und Aufnahmemittel (6), insbesondere bis auf null, zum Schließen der Produktlücken mit einem nachfolgenden Produkt (4) reduziert wird.

7. Gruppiervorrichtung (1) zum Gruppieren von als Dosen, Tuben, oder Kartuschen ausgebildeten länglichen Produkten (4), ausgebildet zur Durchführung eines Gruppierverfahrens nach einem der vorhergehenden Ansprüche, umfassend eine anliefernde Fördereinrichtung (5) für die Produkte (4), ein umlaufendes Förderband (3) zum Fördern der Produkte (4) entlang einer Förderstrecke (S) in eine Förderrichtung (F), Transfermittel (7) zum Transferieren einer Produktgruppe (P) von dem Förderband (3) in Aufnahmemittel (6) sowie Antriebsmittel und Steuermittel zum Ansteuern der Antriebsmittel, wobei die Steuermittel die Antriebsmittel derart ansteuernd ausgebildet sind, dass die Transfermittel (7) zum Transferieren der Produkte (4) während der Bewegung mit der Produktgruppe (P) in der Förderrichtung (F) winklig, insbesondere senkrecht zur Förderrichtung (F) in einer Transferrichtung (T) auf die Aufnahmemittel (6) zuverstellt werden und derart, dass die Aufnahmemittel (6) nach einem Transfer jeweils einer Produktgruppe (P) oder nach dem Transfer mehrerer Produktgruppen (P) senkrecht zur Förderrichtung (F) sowie senkrecht zur Transferrichtung (T) verstellt werden, um die nachfolgende Produktgruppe (P) oberhalb oder unterhalb der bereits transferierten Produktgruppen (P) aufnehmen zu können,
**dadurch gekennzeichnet,**
**dass** die Steuermittel die Antriebsmittel derart ansteuernd ausgebildet sind, dass sowohl die Aufnahmemittel (6) als auch die Transfermittel (7) während des Transfers der Produktgruppe (P), insbesondere synchron mit dem Förderband (3) und der darauf geförderten, zu übergebenden Produktgruppe (P), entlang der Förderstrecke (S) in der Förderrichtung (F) verstellt werden und nach erfolgtem Transfer entlang der Förderstrecke (S) entgegen der Förderrichtung (F) zum Transferieren einer weiteren Produktgruppe (P') in die Aufnahmemittel (6) verstellt werden, und die Aufnahmemittel mittels eines Roboterarms entlang der Förderrichtung hin und her sowie senkrecht hierzu verstellt werden oder alternativ entlang von zwei winklig zueinander angeordneten Verstellachsen, durch zwei überlagerte, winklig zueinander orientierte translatorische Bewegungen jeweils entlang einer der Verstellachsen verstellt werden.

8. Gruppiervorrichtung nach Anspruch 7,
**dadurch gekennzeichnet,**
**dass** das Förderband (3) als Taschenband mit, bevorzugt Vakuumsauger aufweisenden, Taschen (2), bevorzugt zur Aufnahme jeweils genau eines Produktes (4), ausgebildet ist.

9. Gruppiervorrichtung nach einem der Ansprüche 7 oder 8
**dadurch gekennzeichnet,**
**dass** die Transfermittel (7) als Schiebemittel zum Schiebenden Transferieren der Produktgruppe (P, P') in die Aufnahmemittel (6) ausgebildet sind und/oder Vakuumsauger und/oder mechanische Greifer und/oder Klemmmittel zum geführten Transferieren der Produktgruppe (8) in die Aufnahmemittel (6) aufweisen.

10. Gruppiervorrichtung nach einem der Ansprüche 7 bis 9,
**dadurch gekennzeichnet,**
**dass** signalleitend mit den Steuermitteln verbundene Sensormitteln zur Detektion von Produktlücken auf der anliefernden Fördereinrichtung (5) vorgesehen sind und dass die Steuermittel bei Detektion einer Produktlücke die Antriebsmittel derart ansteuernd ausgebildet sind, dass die Geschwindigkeit des Förderbandes (3) sowie der synchron mit diesen mitbewegten Transfermittel (7) und Aufnahmemittel (6), insbesondere bis auf null, zum Schließen der Produktlücken mit einem nachfolgenden Produkt (4) auf eine Geschwindigkeit reduziert wird, die geringer ist als eine Anliefergeschwindigkeit der anliefernden Fördereinrichtung (5).

11. Gruppiervorrichtung nach einem der Ansprüche 7 bis 10,
**dadurch gekennzeichnet,**
**dass** die Aufnahmemittel (6) eine Dornplatte und/oder eine Klipsplatte und/oder eine Vakuumsaugerplatte und/oder eine Umverpackungshalteeinrichtung zum Halten einer Umverpackung zum Transferieren der Produktgruppe (P) mittels der Transfermittel (7) direkt in die Umverpackung, insbesondere ein Verpackungskarton und/oder eine Bündeleinrichtung zum Bündeln einer Mehrzahl von transferierten Produktgruppen (P) umfassen.

12. Gruppiervorrichtung nach einem der Ansprüche 7 bis 11,
**dadurch gekennzeichnet,**
**dass** die anliefernde Förderereinrichtung (5) eine Vakuumtrommel umfasst, mit der die Produkte (4) unmittelbar auf dem Förderband, (3) insbesondere in Taschen (2), ablegbar sind, oder dass die anliefernde Fördereinrichtung (5) ein Transportband mit schwenkbaren Transportpendeltaschen umfasst und aus denen die Produkte (4), insbesondere durch Verschwenken der der Transportpendeltaschen unmittelbar auf dem Förderband (3) ablegbar sind.

13. System umfassend eine Gruppiervorrichtung nach einem der Ansprüche 8 bis 13 sowie eine Herstellungseinrichtung zum Herstellen der zu gruppierenden Produkte (4) und zum Versorgen der anliefernden Fördereinrichtung (5) mit den Produkten (4).

## Claims

1. A method for grouping preferably empty oblong products (4) in the form of cans, tubes or cartridges, the products (4) being delivered by a delivering conveyor (5), preferably from a production line for producing the products (4), and placed on a conveyor belt (3) and conveyed by the conveyor belt (3) at a conveying speed along a conveying section (S) in a conveying direction (F), a group of products (P) comprising several of the products (4) being simultaneously transferred from the conveyor belt (3) into receiving means (6) by transfer means (7), the transfer means (7) being displaced towards the receiving means (6) in a transfer direction (T) at an angle, in particular perpendicular to the conveying direction (F) while moving with the group of products (P) in the conveying direction (F) in order to transfer the products (4), and the receiving means (6) being displaced perpendicular to the conveying direction (F) and perpendicular to the transfer direction (T) after each transfer of a group of products (P) or after the transfer of multiple groups of products (P) so as to be able to receive the next group of products (P) above or below the groups of products (P) already transferred,
**characterized in that**
during the transfer of the group of products (P), both the receiving means (6) and the transfer means (7) are displaced along the conveying section (S) in the conveying direction (F), in particular synchronously with the conveyor belt (3) and with the group of products (P) to be transferred conveyed thereon, and, once the transfer is complete, are displaced along the conveying section (S) against the conveying direction (F) in order to transfer another group of products (P') into the receiving means (6), and that the receiving means are displaced by means of a robot arm in a reciprocating manner along the conveying direction and perpendicular thereto or, alternatively, along two displacement axes disposed at an angle to each other by two superimposed translational movements oriented at an angle to each other and each taking place along one of the displacement axes.

2. The method according to claim 1 ,
**characterized in that**
after being displaced against the conveying direction (F), the transfer means (7) and the receiving means (6) are moved, in particular synchronously, along the conveying section (S) in the conveying direction (F) with the other group of products (P').

3. The method according to any one of the preceding claims,
**characterized in that**
in a receiving unit of the receiving means (6), in particular in the form of a pin plate, a clip plate, or a vacuum plate, products are received next to each other in the conveying direction (F) and one above the other perpendicular to the conveying direction (F) and perpendicular to the transfer direction (T) and that after multiple transfers, in each of which the receiving unit has been loaded with a group of products, the receiving unit is replaced with an empty receiving unit.

4. The method according to any one of the preceding claims,
**characterized in that**
the group of products (P) is transferred by pushing and/or that the products (4) of the group of products (P) are guided in the transfer direction (T) during the transfer by means of vacuum and/or by being mechanically gripped and/or clamped.

5. The method according to any one of the preceding claims,
**characterized in that**
the delivering conveyor (5) and the conveyor belt (3) are driven at speeds which have a fixed ratio to each other when products are transferred without gap, allowing products (4) to be placed in each receiving position on the conveyor belt (3) while the conveyor (5) and the conveyor belt (3) are driven without the conveyor belt (3) and the conveyor (5) being accelerated or decelerated independently of each other.

6. The method according to any one of the preceding claims,
**characterized in that**
with the aid of sensor means, product gaps on the delivering conveyor (5) are detected and the speed of the conveyor belt (3) and of the transfer means (7) and receiving means (6) moved therewith is reduced, in particular as far as to zero, in order to close the product gaps with a following product (4).

7. A grouping device (1) for grouping oblong products (4) in the form of cans, tubes or cartridges, configured to carry out a grouping method according to any one of the preceding claims, comprising a delivering conveyor (5) for the products (4), a circulating conveyor belt (3) for conveying the products (4) along a conveying section (S) in a conveying direction (F), transfer means (7) for transferring a group of products (P) from the conveyor belt (3) into receiving means (6), drive means, and control means for controlling the drive means, the control means being configured to control the drive means in such a manner that in order to transfer the products (4), the transfer means (7) are displaced toward the receiving means (6) in a transfer direction (T) at an angle, in particular perpendicular to the conveying direction (F) while moving with the group of products (P) in the conveying direction (F) and in such a manner that after each transfer of a group of products (P) or after the transfer of multiple groups of products (P), the receiving means (6) are displaced perpendicular to the conveying direction (F) and perpendicular to the transfer direction (T) so as to be able to receive the following group of products (P) above or below the groups of products (P) already transferred,
**characterized in that**
the control means are configured to control the drive means in such a manner that during the transfer of the group of products (P), both the receiving means (6) and the transfer means (7) are displaced, in particular synchronously with the conveyor belt (3) and the group of products (P) to be transferred conveyed thereon, along the conveying section (S) in the conveying direction (F) and, once the transfer is complete, are displaced along the conveying section (S) against the conveying direction (F) in order to transfer another group of products (P') into the receiving means (6), and the receiving means can be displaced by means of a robot arm in a reciprocating manner along the conveying direction and perpendicular thereto or, alternatively, along two displacement axes disposed at an angle to each other by two superimposed translational movements oriented at an angle to each other and each taking place along one of the displacement axes.

8. The grouping device according to claim 7,
**characterized in that**
the conveyor belt (3) is configured as a pocket belt comprising pockets (2) which preferably have vacuum suckers and preferably serve to receive exactly one product (4) each.

9. The grouping device according to any one of claims 7 or 8,
**characterized in that**
the transfer means (7) are configured as pushing means for transferring the group of products (P, P') into the receiving means (6) by pushing and/or have vacuum suckers and/or mechanical grippers and/or clamping means for transferring the group of products (8) into the receiving means (6) in a guided manner.

10. The grouping device according to any one of claims 7 to 9,
**characterized in that**
sensor means that are signal-connected to the control means and serve to detect product gaps on the delivering conveyor (5) are provided and that the control means are configured in such a manner that when a product gap is detected, they control the drive means in such a manner that the speed of the conveyor belt (3) and of the transfer means (7) and of the receiving means (6) moved synchronously therewith is reduced to a speed that is lower than a delivery speed of the delivering conveyor (5), in particular as far as to zero, in order to close the product gaps with a following product (4).

11. The grouping device according to any one of claims 7 to 10,
**characterized in that**
the receiving means (6) comprise a pin plate and/or a clip plate and/or a vacuum-sucker plate and/or an outer-packaging holding device for holding an outer packaging for transferring the group of products (P) directly into the outer packaging, in particular a cardboard box, by means of the transfer means (7) and/or a bundling device for bundling a plurality of transferred groups of products (P).

12. The grouping device according to any one of claims 7 to 11,
**characterized in that**
the delivering conveyor (5) comprises a vacuum drum by means of which the products (4) can be placed directly on the conveyor belt, (3), in particular in pockets (2), or that the delivering conveyor (5) comprises a transport belt which has pivotable suspended transport vessels and from which the products (4) can be placed directly on the conveyor belt (3), in particular by pivoting the suspended transport vessels.

13. A system comprising a grouping device according to any one of claims 7 to 12 and a production device for producing the products (4) to be grouped and for supplying the delivering conveyor (5) with said products (4).

## Revendications

1. Procédé de groupage des produits (4) allongés, de préférence vides, en forme des doses, des tubes ou des cartouches, les produits (4) étant livrés avec un dispositif de transport (5) amenant, de préférence par un ligne de production des produits (4), et étant déposés sur un convoyeur (3) pour transporter les produits à une vitesse de transport le long d'une ligne de transport (S) dans une direction de transport (F), un groupe de produits (P) comprenant plusieurs produits (4) étant transféré simultanément du convoyeur (3) aux moyens de réception (6) par des moyens de transfert (7), les moyens de transfert (7) étant déplacés angulairement, notamment perpendiculairement à la direction de transport (F) vers les moyens de réception (6) dans une direction de transfert (T) pendant le mouvement avec le groupe de produits (P) dans la direction de transport (F) pour transférer les produits (4) et les moyens de réception (6) étant déplacés perpendiculairement à la direction de transport (F) et perpendiculairement à la direction de transfert (T) après un transfert d'un groupe de produits (P) ou après le transfert des plusieurs groupes de produits (P) afin d'être capable de recevoir le prochain groupe de produits (P) au-dessus ou au-dessous des groupes de produits (P) déjà transférés,
**caractérisé en ce que**,
pendant le transfert du groupe de produits (P), les moyens de réception (6) et les moyens de transfert (7) sont déplacés le long de la ligne de transport (S) dans la direction de transport (F), notamment de manière synchrone avec le convoyeur (3) et avec le groupe de produits (P) à transférer qui est transporté sur ledit convoyeur, et sont déplacés le long de la ligne de transport (S) à l'encontre de la direction de transport (F) après le transfert pour transférer un autre groupe de produits (P') dans les moyens de réception (6), et que les moyens de réception sont déplacés au moyen d'un bras de robot de manière réciproque le long de la direction de transport et perpendiculairement à ladite direction ou, alternativement, le long des deux axes de déplacement qui sont disposés angulairement entre eux par deux mouvements de translation superposés qui sont disposés angulairement entre eux et chaque mouvement étant réalisé le long d'un des axes de déplacement.

2. Procédé selon la revendication 1,
**caractérisé en ce que**
les moyens de transfert (7) et les moyens de réception (6) sont déplacés, notamment de manière synchrone, le long de la ligne de transport (S) dans la direction de transport (F) avec un autre groupe de produits (P') après le déplacement à l'encontre de la direction de transport (F).

3. Procédé selon l'une quelconque des revendications précédentes,
**caractérisé en ce que**
dans une unité de réception des moyens de réception (6), notamment en forme d'une plaque munie d'une broche, en forme d'une plaque munie d'un clip ou en forme d'une plaque à vide, des produits sont reçus l'un à côté à l'autre dans la direction de transport (F) et l'un au-dessus de l'autre perpendiculaire à la direction de transport (F) et perpendiculaire à la direction de transfert (T), et que l'unité de réception est remplacée par une unité de réception vide après plusieurs transferts au cours desquels l'unité de réception a été chargé d'un groupe de produits.

4. Procédé selon l'une quelconque des revendications précédentes,
**caractérisé en ce que**
le groupe de produits (P) est transféré en poussant et/ou que les produits (4) du groupe de produits (P) sont guidés dans la direction de transfert (T) pendant le transfert au moyen du vide et/ou par être agrippés et/ou serrés mécaniquement.

5. Procédé selon l'une quelconque des revendications précédentes,
**caractérisé en ce que**
le dispositif de transport (5) amenant et le convoyeur (3) sont entrainés à des vitesses qui ont une relation fixe quand les produits sont transférés sans espace de telle manière qu'un produit (4) peut être déposé à chaque position de réception sur le convoyeur (3) quand le dispositif de transport (5) et le convoyeur (3) sont entrainés sans accélérer ou ralentir le convoyeur (3) et le dispositif de transport (5) indépendamment l'un de l'autre.

6. Procédé selon l'une quelconque des revendications précédentes,
**caractérisé en ce**
**qu'**à l'aide des moyens de détection, des espaces entre les produits sur le dispositif de transport (5) amenant sont détectés et la vitesse du convoyeur (3) et des moyens de transfert (7) et moyens de réception (6) en mouvement conjointement est réduite, notamment à zéro, pour fermer l'espace entre les produits par un produit (4) suivant.

7. Dispositif de groupage (1) destiné à grouper des produits (4) allongés en forme des doses, des tubes ou des cartouches formé afin d'exécuter un procédé de groupage selon l'une quelconque des revendications précédentes, comprenant un dispositif de transport (5) amenant pour les produits (4), un convoyeur (3) circulant destiné à transporter les produits (4) le long d'une ligne de transport (S) dans une direction de transport (F), des moyens de transfert (7) destinés transférer un groupe de produits (P) du convoyeur (3) dans des moyens de réception (6), des moyens d'entraînement et des moyens de contrôle destinés à contrôler les moyens d'entraînement, les moyens de contrôle étant formés pour contrôler les moyens d'entraînement de telle manière que les moyens de transfert (7) sont déplacés angulairement, notamment perpendiculairement à la direction de transport (F) vers les moyens de réception (6) dans une direction de transfert (T) pendant le mouvement avec le groupe de produits (P) dans la direction de transport (F) pour transférer les produits (4) et de telle manière que les moyens de réception (6) sont déplacés perpendiculairement à la direction de transport (F) et perpendiculairement à la direction de transfert (T) après chaque transfert d'un groupe de produits (P) ou après le transfert des plusieurs groupes de produits (P) afin de pouvoir recevoir le prochain groupe de produits (P) au-dessus ou au-dessous des groupes de produits (P) déjà transférés,
**caractérisé en ce que**
pendant le transfert du groupe de produits (P), les moyens de réception (6) et les moyens de transfert (7) sont déplacés le long de la ligne de transport (S) dans la direction de transport (F), notamment de manière synchrone avec le convoyeur (3) et avec le groupe de produits (P) devant être transféré qui est transporté par ledit convoyeur, et, sont déplacés le long de la ligne de transport (S) à l'encontre de la direction de transport (F) après le transfert pour transférer un autre groupe de produits (P') dans les moyens de réception (6), et que les moyens de réception sont déplacés au moyen d'un bras de robot de manière réciproque le long de la direction de transport et perpendiculairement à ladite direction ou, alternativement, le long des deux axes de déplacement qui sont disposés angulairement entre eux par deux mouvements de translation superposés qui sont disposés angulairement entre eux et chaque mouvement étant réalisé le long d'un des axes de déplacement.

8. Dispositif de groupage selon la revendication 7,
**caractérisé en ce que**
le convoyeur (3) est configuré comme un ruban de sachets comprenant de sachets (2), de préférence ayant des ventouses, pour recevoir, de préférence, un produit (4).

9. Dispositif de groupage selon la revendication 7 ou la revendication 8,
**caractérisé en ce que**
les moyens de transfert (7) sont configurés comme des moyens de poussée pour un transfert poussant du groupe de produits (P, P') dans les moyens de réception (6) et/ou que les moyens de transfert ont des ventouses et/ou des pinces mécaniques et/ou des moyens de serrage pour transférer le groupe de produits (4) de manière guidée dans les moyens de réception (6).

10. Dispositif de groupage selon l'une quelconque des revendications 7 à 9,
**caractérisé en ce que**
des moyens de détection, qui ont associés aux moyens de contrôle en conduisant des signaux, sont pourvus pour détecter des espaces entre les produits sur le dispositif de transport (5) amenant et que les moyens de contrôle sont configurés de telle manière que, quand un espace entre les produits est détecté, la vitesse du convoyeur (3) et des moyens de transfert (7) et moyens de réception (6) en mouvement conjointement est réduite à une vitesse qui est inférieure à la vitesse d'aménagement du dispositif de transport (5) amenant, notamment à zéro, pour fermer l'espace entre les produits par un produit (4) suivant.

11. Dispositif de groupage selon l'une quelconque des revendications 7 à 10,
**caractérisé en ce que**
les moyens de réception (6) comprennent une plaque munie d'une broche et/ou une plaque munie d'un clip et/ou une plaque à vide et/ou un dispositif de maintien du suremballage destiné à maintenir un suremballage pour transférer directement le groupe de produits (P) au moyen des moyens de transfert (7) dans le suremballage, notamment un carton d'emballage et/ou un dispositif de regroupement destiné à regrouper une pluralité de groupes de produits (P) transférés.

12. Dispositif de groupage selon l'une quelconque des revendications 7 à 11,
**caractérisé en ce que**
le dispositif de transport (5) amenant comprend un tambour à vide permettant de déposer les produits (4) directement sur le convoyeur (3), notamment dans des sachets (2), ou que le dispositif de transport (5) amenant comprend une bande transporteuse ayant des pochettes de transport pendulaires permettant de déposer les produits directement sur le convoyeur (3), notamment en pivotant les pochettes de transport pendulaires.

13. Système comprenant un dispositif de groupage selon l'une quelconque des revendications 8 à 13 et un dispositif de production destiné à produire les produits (4) à grouper et destiné à alimenter le dispositif de transport (5) amenant en produits (4).
